# EUROPEAN PATENT SPECIFICATION

(11) **EP 3 124 753 B1**
(45) Date of publication and mention of the grant of the patent: **16.10.2019**
(21) Application number: 16179868.1
(22) Date of filing: 18.07.2016
(51) Int. Cl.: F01D 11/00, F01D 5/28, F16J 15/48

(54) **SEALS WITH A CONFORMABLE COATING FOR TURBOMACHINERY**
DICHTUNGEN MIT EINER KONFORMEN BESCHICHTUNG FÜR TURBOMASCHINEN
JOINTS D'ÉTANCHÉITÉ AVEC UN REVÊTEMENT ADAPTABLE POUR UNE TURBOMACHINE

(30) Priority: 28.07.2015 US 201514810672
(43) Date of publication of application: 01.02.2017
(73) Proprietor: General Electric Company, Schenectady, NY 12345 (US)
(72) Inventor: MARIN, Anthony Christopher, Niskayuna, NY 12309-1027 (US); VENKATARAMANI, Venkat Subramaniam, Niskayuna, NY 12309 (US); SARAWATE, Neelesh Nandkumar, Niskayuna, NY 12309 (US); SEVINCER, Edip, Niskayun, NY 12309-1027 (US)
(74) Representative: Openshaw & Co.

(56) References cited:
- EP-A1- 0 903 519
- EP-A1- 2 369 204
- EP-A2- 0 304 176
- GB-A- 751 863
- US-A1- 2008 050 236

## Description

### BACKGROUND OF THE INVENTION

The present application relates generally to seals for reducing leakage, and more particularly to seals configured to operate within a seal slot to reduce leakage between adjacent components of turbomachinery.

Leakage of hot combustion gases and/or cooling flows between turbomachinery components generally causes reduced power output and lower efficiency. For example, hot combustion gases may be contained within a turbine by providing pressurized compressor air around a hot gas path. Typically, leakage of high pressure cooling flows between adjacent turbine components (such as stator shrouds, nozzles, and diaphragms, inner shell casing components, and rotor components) into the hot gas path leads to reduced efficiency, and requires an increase in burn temperature and a decrease in engine gas turbine efficiency to maintain a desired power level (as compared to an environment void of such leakage). Turbine efficiency thus can be improved by reducing or eliminating leakage between turbine components.

Traditionally, leakage between turbine component junctions is treated with metallic seals positioned in the seal slots formed between the turbine components, such as stator components. Seal slots typically extend across the junctions between components such that metallic seals positioned therein block or otherwise inhibit leakage through the junctions. However, preventing leakage between turbine component junctions with metallic slot seals positioned in seal slots in the turbine components is complicated by the relatively high temperatures produced in modern turbomachinery. Due to the introduction of new materials, such as ceramic-matrix composite (CMC) turbine components, that allow turbines to operate at higher temperatures (e.g., over 1,500 degrees Celsius) relative to traditional turbines, conventional metallic turbine slot seals for use in seal slots may not be adequate.

Preventing leakage between turbine component junctions with metallic seals is further complicated by the fact that the seal slots of turbine components are formed by corresponding slot portions in adjacent components (a seal positioned therein typically extends across the junction between components). Misalignment between these adjacent components, such as resulting from thermal expansion, manufacturing, assembly and/or installation limitations, etc., produces an irregular seal slot contact surface that may vary in configuration, shape and/or magnitude over time. Further, the seal slot contact surface may include surface irregularities or roughness, such as resulting from manufacturing limitations, thermal expansion, wear, oxidation etc., that allow air to migrate between the seal slot contact surface and the outer surface(s) of a seal positioned there against. The surface roughness of the seal slot contact surface may also vary overtime, such as resulting from thermal cyclic loading, oxidation and/or wear.

Such irregularities in the seal slot contact surface allow for leakage across a slot seal positioned within the seal slot if the seal does not deform or otherwise conform to such irregularities. Unfortunately, many conventional metallic seals that attempt to account for such irregular seal slot contact surfaces (e.g., due to misalignment) do not adequately withstand current turbine operating temperatures. Further, many conventional metallic and non-metallic seals that do attempt to account for surface irregularities of the seal slot contact surfaces are not able to adapt to changes of the surface irregularities over time, as they typically plastically deform or detach to at least partially fill the surface irregularities.

US 2008/0050236 discloses a conformable seal, wherein a metallic substrate is provided with a conformal coating. The coating is described to have a Rockwell superficial hardness of 30-70 HR15Y. As known to the skilled person, Rockwell hardness scale HR15Y is used for testing very soft, abradable coatings. The documents describes that the conformity is achieved through wear-in, i.e. by wear of the abradable coating. The skilled person will readily appreciate, that the sealing will have to newly wear in if the configuration of the sealing slot changes, and may thus become used up and the sealing effect decrease.

Accordingly, turbomachinery component junction seals configured for use in typical turbine seal slots that withstand the increasingly higher operating temperatures of turbines and conform to irregularities in the seal slot contact surface would be desirable.

### SUMMARY OF THE INVENTION

The invention relates to a seal as set forth in claim 1.

In one aspect, the present disclosure provides a seal for positioning within a seal slot of a turbomachine formed at least partially by seal slot surfaces of adjacent components to prevent leakage across a gap extending between the components. The seal includes a metallic shim and a coating. The metallic shim defines an outer surface including a sealing surface and a support surface. The coating overlays and is coupled to at least the sealing surface of the metallic shim and forming an outer surface of the seal for engagement with the seal slot surfaces. The coating is operable to conform to surface irregularities of the seal slot surfaces and remain coupled to the metallic shim at a predefined operating temperature and a predefined operating pressure to reduce leakage past the seal and through the gap.

In some embodiments, the coating may be operable to elastically deform to conform to the surface irregularities of the seal slot surfaces and remain coupled to the metallic shim at the predefined operating temperature and the predefined operating pressure. In some embodiments, the coating may be a metallic coating, and the melting temperature of the metallic coating may be above the predefined operating temperature. In some such embodiments, the predefined operating temperature may be at least 1,500 degrees Fahrenheit or 815.5°C and the predefined operating pressure may be at least 5 psi or 34,473 KPa acting to force the coating against the seal slot surfaces. In some other such embodiments, the metallic coating may be a copper alloy. In some such embodiments, the metallic coating may be 90 weight percent copper and 10 weight percent aluminum.

In some embodiments, the coating may be operable to flow to conform to the surface irregularities of the seal slot surfaces and remain coupled to the metallic shim at the predefined operating temperature and the predefined operating pressure. In some such embodiments, the predefined operating temperature may be at least 750 degrees Fahrenheit or 398,9°C and the predefined operating pressure may be at least 5 psi or 34,473 KPa acting to force the coating against the seal slot surfaces.

In some embodiments, the coating may be a glass coating comprising a glass phase and oxides. In some such embodiments, the glass phase of the glass coating may include at least one of silica, boric oxide, phosphorous pentoxide and alumina. In some such embodiments, the oxides of the glass coating may include oxides of at least one of alkali metals, alkaline earth metals and rare earth metals.

In some embodiments, the coating may be an enamel coating including a glass phase and fillers. In some such embodiments, the glass phase of the enamel coating may include at least one of alkali alumino boro phospho silicates and alkaline earth alumino boro phospho silicates. In some such embodiments, the fillers of the enamel coating may include refractory oxide compounds. In some embodiments, the coating may be a ceramic coating comprising a crystalline ceramic material.

In some embodiments, the surface irregularities of the seal slot surfaces may form a surface roughness Ra within the range of 1 micrometer to 12.5 micrometers. In some embodiments, the coating may include a coefficient of thermal expansion (CTE) within 25% of a CTE of the metallic shim. In some embodiments, the predefined operating pressure may be within the range of 5 psi and 200 psi or 34,473 Kpa and 1378,9 KPa acting to force the coating against the seal slot surfaces.

In another aspect, the present disclosure provides a turbomachine including a first turbine component, a second turbine component adjacent the first turbine component and a seal. The first and second turbine components include seal slot surfaces at least partially forming a seal slot extending across a gap between the first and second turbine components. The seal is positioned within the seal slot and extends across the gap to reduce leakage therethrough. The seal includes a metallic shim and a coating. The metallic shim includes a sealing surface and a support surface. The coating overlies and is coupled to at least the sealing surface of the metallic shim and forms an outer surface of the seal for engagement with the seal slot surfaces. The coating is operable to conform to surface irregularities of the seal slot surfaces and remain coupled to the metallic shim at a predefined operating temperature and a predefined operating pressure to reduce leakage past the seal and through the gap. The coating is a metallic coating including a copper alloy, a glass coating including a glass phase and oxides of at least one of an alkali metals, an alkaline earth metals and a rare earth metals, an enamel coating including refractory oxide compounds and at least one of alkali alumino boro phospho silicates and alkaline earth alumino boro phospho silicates, or a ceramic coating including a crystalline ceramic material. In some embodiments, coating may be a glass coating or an enamel coating, and the coating may be operable to flow to conform to the surface irregularities of the seal slot surfaces and remain coupled to the metallic shim at the predefined operating temperature and the predefined operating pressure.

These and other objects, features and advantages of this disclosure will become apparent from the following detailed description of the various aspects of the disclosure taken in conjunction with the accompanying drawings.

### BRIEF DESCRIPTION OF THE DRAWINGS

FIG. 1 is a cross-sectional view of an exemplary slot seal according to the present disclosure;
FIG. 2 is a perspective view of the exemplary slot seal of FIG. 1;
FIG. 3 is a side cross-sectional view of an exemplary slot seal according to the present disclosure positioned within an exemplary seal slot of exemplary turbine components; and
FIG. 4 is an enlarged cross-sectional view of a portion of the junction of the exemplary slot seal and the exemplary seal slot of FIG. 3.

### DETAILED DESCRIPTION

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Any examples of operating parameters are not exclusive of other parameters of the disclosed embodiments. Components, aspects, features, configurations, arrangements, uses and the like described, illustrated or otherwise disclosed herein with respect to any particular seal embodiment may similarly be applied to any other seal embodiment disclosed herein.

Composite turbomachinery component junction seals configured for use in turbine seal slots (e.g., composite turbine slot seals), and methods of manufacturing and using same, according to the present disclosure are configured to withstand the relatively high operating temperatures of turbines including CMC components and/or conform to irregularities in the seal slot contact surface, such as to the surface roughness of the surfaces forming the seal slot contact surface against which the seal slot is forced (in use). In particular, the slot seals are configured to substantially conform to the irregularities (e.g., surface roughness) of the seal slot contact surface to reduce or prevent leakage between the slot seals and the seal slot contact surface. Further, the slot seals are configured to prevent chemical interaction and substantially limit thermal interaction of metallic components of the slot seals with the hot gas flow/leakage and/or the seal slot itself. In this way, the slot seals provided herein allow for use in high temperature turbine applications to reduce leakage sue to irregularities (e.g., surface roughness) of the seal slot contact surface.

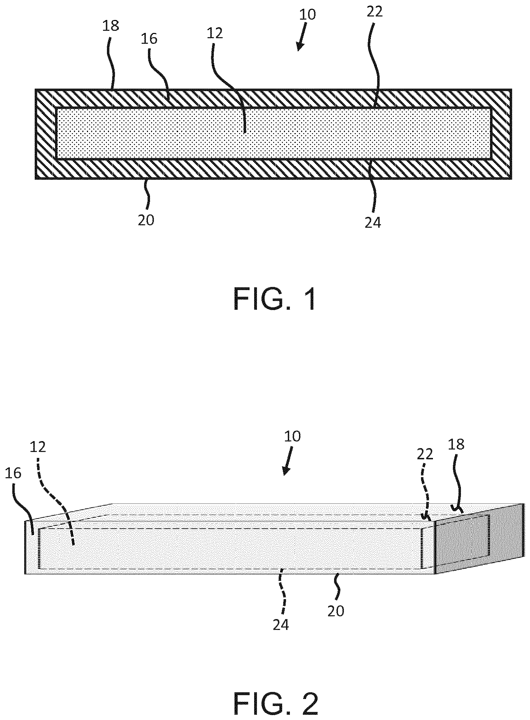

As shown in FIGS. 1 and 2, the exemplary seal 10 may be a seal assembly including at least one shim or screen 12 and at least one coating or coating layer 16 coupled to one another. The shim 12 may be effective in substantially preventing the passage of substances therethrough. For example, the shim 12 may be substantially solid or otherwise substantially impervious to at least one of gases, liquids and solids at pressures and temperatures produced in turbomachinery. However, the shim 12 may also provide flexibility at pressures and temperatures produced in turbomachinery to accommodate skews or offsets in slot surfaces in the thickness T1 direction. In one embodiment, the shim 12 is a substantially solid plate-like metallic member. In some such embodiments the shim 12 may be a high temperature metallic alloy or super alloy. For example, in some embodiments the shim 12 may be made from stainless steel or a nickel based alloy (at least in part), such as nickel molybdenum chromium alloy, Haynes 214 or Haynes 214 with an aluminum oxide coating. In some embodiments, the shim 12 may be made of a metal with a melting temperature of at least 1,500 degrees Fahrenheit, or potentially at least 1800 degrees Fahrenheit. In some embodiments, the shim 12 may be made of a metal with a melting temperature of at least 2,200 degrees Fahrenheit.

A first support surface or side 22 of the shim 12, as shown in FIGS. 1 and 2, may be substantially planar (in a neutral state). As explained further below, the first support surface 22 of the shim 12, and a coating 16 coupled thereto, may be configured to engage or interact with a cooling high pressure air flow that flows through at least one gap or joint between at least first and second components that form a seal slot (at least in part) so that the seal 10 is forced or pressed against sealing surfaces of the first and second components in the seal slot (when the seal 10 is installed in the seal slot). In this way, the seal is operable to substantially prevent gases, liquids and/or solids from migrating through the gap or joint. As such, at least one of the shim 12 and the coating 16 (or the shim 12 and the coating 16 acting in concert) may be substantially impervious to liquids, gases and/or solids at pressures experienced in turbomachinery such that the seal 10 provides at least a low leakage rate past the seal slot.

A sealing surface or side 24 of the shim 12 that substantially opposes the support surface or side 22, as shown in FIGS. 1 and 2, may be substantially planar (in a neutral state). As explained further below, at least the sealing surface 24 of the shim 12 may include the coating 16, and the coating 16 overlying the sealing surface 24 may engage or interact with corresponding sealing surfaces of the first and second components forming the seal slot (and a high temperature air flow flowing through the gap between the first and second components) so that the seal 10 substantially prevents, or reduced the amount of, gases, liquids and/or solids migrating through the gap.

As shown in FIGS. 1 and 2, the coating 16 may be applied to the seal 10 such that the coating 16 is provided at least on the sealing surface 24 of the shim 12 to form a sealing side or surface 20 of the coating 16 (or the seal 10 itself). The coating 16 may substantially cover or overly at least the sealing surface 24 of the shim 12. In some embodiments, the coating 16 may overly the sealing surface 24 and other portions of the outer surface of the shim 12. For example, the coating 16 may substantially cover or overly the support surface 22 of the shim 12 to form an exterior side or surface 22 of the coating 16 (or the seal 10 itself). In some other embodiments, the coating 16 may cover or overly the sealing surface 24, the support surface 22 and the portions of the exterior surface of the shim 12 extending between the support surface 22 and the support surface 42, as shown in FIGS. 1 and 2. In this way, as shown in FIG. 2, the coating 16 may substantially cover or overly the entirety of the outer surface of the metallic shim 12 (i.e., the coating 16 may surround the shim 12).

The coating 16 may be configured and applied to the shim 12 such that it is chemically bonded to metallic shim 12 (e.g., at least overlying and bonded to the sealing surface 24 of the shim 12). The coating 16 may substantially fill pores or voids of the shim 12, and may be substantially non-porous. The coating 16 may be configured to substantially prevent or retard oxidation of the metallic shim 12. In some embodiments, the coating 16 may be one or more coating material that is/are effective in substantially preventing chemical interaction and substantially limiting thermal interaction of at least the metallic shim 12 when the seal 10 is utilized in a seal slot of a turbine, such as a seal slot formed by components of a high temperature gas turbine, such as stator components. As explained further below, the coating 16 overlying the sealing surface 24 may be configured to engage and conform to at least first and second sealing surfaces of at least first and second turbine components that form a seal slot to substantially prevent or reduce the amount of gases, liquids and/or solids from migrating through a gap or joint between the first and second components. In this way, the coating 16 may be effective in substantially preventing silicide formation, oxidation, thermal creep and/or wear of at least the metallic shim 12, and to at least limit the amount leakage between the seal 10 and at least the first and second sealing surfaces during use of the seal 10 in a seal slot of a turbine. Stated differently, the coating 16 allows for metallic-based seals, such as the seal 10 with the one or more metallic shim 12, to be utilized in high temperature gas turbine applications to reduce leakage therein.

As discussed above, sealing surfaces of a seal slot of turbine components may include surface irregularities (with respect to a hypothetical perfectly smooth or planar surface) such that the seal slot surfaces define or include a surface roughness. The surface irregularities of the seal slot surfaces may be due to manufacturing limitations, thermal loading, wear or any other potential mode. For example, the seal slot surfaces of CMC turbine components may include a surface roughness Ra of greater than about 1 micrometer, and potentially up to about 12.5 micrometers. Such surface roughness of the seal slot surfaces of CMC components may be primarily driven by manufacturing limitations. However, the surface roughness of the seal slot surfaces may change over time, such as due to thermal loading, oxidation and/or wear. The surface roughness of the seal slot surfaces may allow leakage between the seal slot surfaces and the outer surface(s) of the seal 10 (when the seal 10 is in engagement therewith). For example, when the sealing surface 20 of the coating 16 of the seal 10 is in engagement with seal slot surfaces including surface irregularities (e.g., a surface roughness Ra greater than about 1 micrometer), the surface roughness of the seal slot surfaces and the sealing surface 20 may cooperate to form one or more pathway, space or void through which leakage can pass.

To account for such surface irregularities (e.g., surface roughness Ra) of seal slot surfaces, at least the portion of the coating 16 overlying the sealing surface 24 of the shim 12 of the seal 10 is operable to conform to the surface irregularities and remain coupled to the metallic shim 12 at a predefined operating temperature and a predefined operating pressure acting to force the seal 10 against the seal slot surfaces to reduce leakage past the seal (i.e., through the gap that the seal is "sealing"). By conforming to the surface irregularities of the seal slot surfaces, the coating 16 effectively decreases the leakage flow area at the interface of the coating 16 and the seal slot surfaces, and thereby enhances the performance of the seal 1 0 (i.e., enhances the ability to prevent leakage between turbine component junctions).

The coating 16 may conform to the surface irregularities of seal slot surfaces, while remaining coupled to the metallic shim 12, by a variety of differing modes. For example, the coating 16 may be operable to deform but remain coupled to the metallic shim 12 at the predefined operating temperature and the predefined operating pressure to conform to the surface irregularities of seal slot surfaces. In some such embodiments, the coating 16 may be operable to plastically deform but remain coupled to the metallic shim 12 at the predefined operating temperature and the predefined operating pressure to conform to the surface irregularities of seal slot surfaces. In some other such embodiments, the coating 16 may be operable to elastically deform but remain coupled to the metallic shim 12 at the predefined operating temperature and the predefined operating pressure to conform to the surface irregularities of seal slot surfaces. In other embodiments, the coating 16 may be operable to flow, but remain coupled to the metallic shim 12, at the predefined operating temperature and the predefined operating pressure to conform to the surface irregularities of seal slot surfaces. In some such embodiments, the coating 16 may be operable to viscoelastically flow, but remain coupled to the metallic shim 12, at the predefined operating temperature and the predefined operating pressure to conform to the surface irregularities of seal slot surfaces.

The coating 16 may be configured to adapt to changes in surface irregularities over time, such as advantageously allow the coating 16 to adapt to changes in surface irregularities of seal slot surfaces. As noted above, the coating 16 may be operable to deform or flow, but remain coupled to the metallic shim 12, at the predefined operating temperature and the predefined operating pressure to conform to surface irregularities. The coating 16 may be configured that such deformation or flow (while remaining coupled to the metallic shim 12) is not "permanent." For example, the coating 16 may be configured such that the coating 16 can further conform (e.g., deform or flow), while remaining coupled to the metallic shim 12, at the predefined operating temperature and the predefined operating pressure to differing surface irregularities. In some embodiments, after conforming (e.g., via deformation or flow) to a particular surface roughness or configuration (while remaining coupled to the metallic shim 12), the coating 16 may return (e.g., via deformation or flow), at least partially, to its pre-conformed shape or configuration, such as when the seal 10 experiences a temperature below the predefined operating temperature and/or a pressure below the predefined operating pressure. In this way, the coating 16 may have an elastic nature (at least in part). In some other embodiments, the coating 16 may not have an elastic nature. However, regardless of whether or not the coating 16 includes, at least partially, an elastic nature (i.e., elastically or viscoelastically deforms or flows), the coating 16 may be configured to conform (e.g., via deformation or flow) to differing surface irregularities over time. For example, the coating 16 may be configured to conform (e.g., via deformation or flow) to a particular surface roughness or configuration while remaining coupled to the metallic shim 12 at the predefined operating temperature and the predefined operating pressure at a particular point in time, and then conform again (e.g., via deformation or flow) while remaining coupled to the metallic shim 12 at the predefined operating temperature and the predefined operating pressure to adapt to a differing surface roughness or configuration at a later time.

The coating 16 may include at least one portion with at least a similar coefficient of thermal expansion (hereinafter CTE) to the metallic shim 12. For example, the coating 16 and the shim 12 may be configured such that any difference in CTE is less than a magnitude that is effective to decouple the coating 16 and the shim 12 due to cyclic thermal loading of the seal 10, such as during use in turbomachinery. As such, the CTE of the shim 12 and the CTE of the coating 16 may differ only to an extent that the bond between the shim 12 and the coating 16 is not broken by cyclic thermal loading of the seal 1 0 during use in turbomachinery. The material of the coating 16 (and/or the shim 12) may differ, but the material of the coating 16 (and/or the shim 12) may be selected or configured such that the coating 12 does not become decoupled from the shim 12 when the seal 10 is cyclically heated to a temperature greater than or equal to the predefined operating temperature (e.g., subjected to cyclic thermal loading to a temperature greater than or equal to the predefined operating temperature when utilized in a seal slot of a turbine). In some embodiments, the coating 16 may include a CTE that is within 25% of the CTE of the metallic shim 12. The coating 16 may also be tuned to have a relative CTE as compared to the CTE of the shim 12 such that the coating 16 is under compression (via the shim 12) at temperatures at below about the predefined operating temperature. The compression of the coating 16 (via the shim 12) may thereby prevent spalling of the coating 16 at temperatures below about the predefined operating temperature. As discussed further herein, at about the predefined operating temperature and greater, the coating 16 may be compliant such that it deforms or flows to conform to any surface irregularities one or more sealing surfaces of a seal slot. As such, the coating 16 may be configured to not be in compression at such temperatures.

The predefined operating temperature and predefined operating pressure of the seal 10 may be predefined values at which the coating 16 of the seal 10 is operable to conform (e.g., deform or flow) to surface irregularities of seal slot surfaces and remain attached to the shim 12. For example, the predefined operating temperature and predefined operating pressure of the seal 1 0 may be predefined values at which the coating 16 of the seal 10 is operable to deform or flow (e.g., elastically or viscoelastically) to conform to surface irregularities of seal slot surfaces and remain attached to the shim 12. The coating 16 of the seal 10 may, however, also be operable to conform to surface irregularities of seal slot surfaces and remain attached to the shim 12 at temperatures and pressures other than the predefined operating temperature and predefined operating pressure. For example, the predefined operating temperature and predefined operating pressure of the seal 10 may be predefined minimum values at which the coating 16 of the seal 1 0 is operable to conform to surface irregularities of seal slot surfaces and remain attached to the shim 12. In such embodiments, the coating 16 of the seal 10 may be operable to conform to surface irregularities of seal slot surfaces and remain attached to the shim 12 at temperatures and pressures greater than the predefined minimum operating temperature and pressure.

The predefined operating temperature and predefined operating pressure of the seal 10 may or may not be related to the operating temperature and operating pressure of a particular turbomachine in which the seal 10 may be utilized. In some embodiments, the seal 10 may be configured or utilized for a particular seal slot of a particular turbomachine such that the predefined operating temperature and predefined operating pressure of the seal 1 0 is equal to or less than the operating temperature and the operating pressure in the seal slot of the turbomachine. In this way, the coating 16 of the seal 10 may deform or flow to conform to surface irregularities of seal slot surfaces of the particular turbomachine and remain attached to the shim 12 when the seal 10 is utilized in the turbomachine. In some embodiments, the predefined operating temperature may be at least 398,9°C or 750 degrees Fahrenheit. In some other embodiments, the predefined operating temperature may be at least 537,8°C or 1,000 degrees Fahrenheit, or at least 1,500 degrees Fahrenheit. The predefined operating pressure may be a predefined pressure that acts to force the coating 16 of the seal 10 against one or more surface, such as seal slot surfaces. For example, the predefined operating pressure may be a pressure of a predefined strength that acts across the seal 1 0 to force the coating 16 of the seal 1 0 against one or more surface, such as a pressure that acts across the seal 10 to force the coating 16 of the seal 10 against seal slot surfaces of a seal slot (when the seal 10 is installed in the seal slot). As explained further below, the predefined operating pressure may be a differential pressure of two or more pressures that, in net, act to force the coating 16 of the seal 10 against one or more surface, such as seal slot surface. In some embodiments, the predefined operating pressure may be may be at least 5 psi. In some embodiments the predefined operating pressure may be within the range of 5 psi and 50 psi, and in some other embodiments the predefined operating pressure may be within the range of 5 psi and 200 psi.

The predefined operating temperature and predefined operating pressure of the seal 10 may be related characteristics. For example, the coating 16 of the seal 10 may be operable to deform or flow to conform to surface irregularities of seal slot surfaces and remain attached to the shim 12 at a lower predefined operating temperature the greater the predefined operating pressure. Similarly, the coating 16 of the seal 10 may be operable to deform or flow to conform to surface irregularities of seal slot surfaces and remain attached to the shim 12 at a lower predefined operating pressure the greater the predefined operating temperature. In this way the predefined operating temperature and predefined operating pressure of the seal 10 may, in concert, allow the coating 16 of the seal 10 may be operable to deform or flow to conform to surface irregularities of seal slot surfaces and remain attached to the shim 12.

As noted above, the coating 16 may become soft and conform to surface irregularities of seal slot surfaces, while remaining coupled to the metallic shim 12, at a predefined operating temperature and a predefined operating pressure by a variety of differing modes. In some embodiments, the coating 16 may be an inorganic coating that becomes relatively soft at the predefined operating temperature such that at the predefined operating pressure the metallic coating 16 deforms or flows to conform to the surface irregularities of seal slot surfaces while remaining coupled to the metallic shim (depending upon the temperature and pressure in the corresponding seal slot). In one mode, the coating 16 may be a metallic coating that is relatively soft at the predefined operating temperature such that at the predefined operating pressure the metallic coating 16 deforms to conform to the surface irregularities of the seal slot surfaces while remaining coupled to the metallic shim 12 (depending upon the temperature and pressure in the corresponding seal slot). In this way, the metallic coating 16 can effectively decrease the leakage flow area at the interface of seal slot surfaces and the coating 16 of the seal 10. The metallic coating 16 may plastically and/or elastically deform at the predefined operating temperature and the predefined operating pressure. In some such embodiments, the predefined operating temperature of the metallic coating 16 of the seal 10 may be at least 1,500 degrees Fahrenheit, and the predefined operating pressure may be at least 5 psi.

The metallic coating 16 of the seal 10 may be any metallic material that conforms to surface irregularities of seal slot surfaces, but remains coupled to the shim 12, at the predefined operating temperature and the predefined operating pressure. The metallic material of the metallic coating 16 may also prevent oxidation of the shim 12. The melting temperature of the metallic coating 16 may be greater than the predefined operating temperature.

In some embodiments, the metallic coating 16 may be a copper alloy. For example, the metallic coating 16 may include aluminum alloyed with copper such that a protective aluminum oxide oxidation layer is formed to prevent oxidation of the copper. In some embodiments, the copper alloy metallic coating 16 may be about 90 weight percent copper and about 10 weight percent aluminum.

In another mode, the coating 16 may be a glass coating that becomes soft and deforms or flows to conform to surface irregularities of seal slot surfaces, while remaining coupled to the metallic shim 12, at a predefined operating temperature and a predefined operating pressure. In this way, the glass coating 16 can effectively decrease the leakage flow area at the interface of seal slot surfaces and the coating 16 of the seal 10 (depending upon the temperature and pressure at the seal slot surfaces). The glass coating 16 may deform or flow (e.g., elastically or viscoelastically) at the predefined operating temperature and the predefined operating pressure while remaining coupled to the metallic shim 12. In some embodiments, the glass coating 16 is configured such that, at the predefined operating temperature and the predefined operating pressure, the glass coating 16 becomes "soft" and flows into depressions formed by the surface irregularities of the seal slot surfaces and remains coupled to the metallic shim 12 (depending upon the temperature and pressure at the seal slot surfaces). For example, the glass coating may include a glass or glassy material with a softening point near or above the operating temperature of the seal 12 (e.g., within 20% of operating temperature of the seal). In some embodiments, the predefined operating temperature of the seal 1 0 with the glass coating 16 may be at least 750 degrees Fahrenheit, and the predefined operating pressure may be at least 5 psi. In some such embodiments the glass coating 16 may be a borosilicate glass. In some embodiments, the predefined operating temperature of the seal 10 with the glass coating 16 may be at least 1,000 degrees Fahrenheit, and the predefined operating pressure may be at least 5 psi.

In some embodiments, the viscosity of the glass coating 16 may be high enough such that the glass coating 16 does not decouple from the metallic shim 12 (i.e., at least a portion of the coating 16 does not become decoupled from the shim 12 or other portions of the coating 16) at the predefined operating temperature and the predefined operating pressure. For example, the glass coating 16 may include suitable expansion matched fillers that are effective in controlling the flow of the softened glass coating 16 at the predefined operating temperature and pressure to prevent the glass coating from becoming decoupled from the metallic shim 12, yet maintain a deformable or flowable nature such that the coating 16 flows (e.g., viscoelastically) to conform to surface irregularities of seal slot surfaces (depending upon the temperature and pressure in a corresponding seal slot).

The glass coating 16 may include a glass phase and oxides. In some embodiments, the glass phase of the glass coating 16 may include at least one of silica, boric oxide, phosphorous pentoxide and alumina. In some embodiments, the oxides of the glass coating may include oxides of at least one of an alkali metal, an alkaline earth metal and a rare earth metal. The coating 16 may also include other materials to optimize the rheological and/or flow (e.g., viscoelastic) properties of the glass coating 16 such that it conforms to surface irregularities of seal slot surfaces, while remaining coupled to the metallic shim 12, at a predefined operating temperature and a predefined operating pressure. For example, the glass coating 16 may include oxides of at least one of as titania, zirconia, niobia, tantala and hafnia that optimize the rheological and flow (e.g., viscoelastic) properties of the coating 16.

In some embodiments, the glass coating 16 may include materials that operate to promote the adhesion of the coating 16 to the metallic shim 12. For example, the glass coating 16 may include metal oxides and/or other adhesion promoters that promote adhesion of the coating 16 to the metallic shim 12 and/or oxidation resistance of the metallic shim 12. The glass coating 16 may include an enamel ground coat metallic shim 12 to promote adhesion of the coating 16 to the metallic shim 12 and/or oxidation resistance of the metallic shim 12. In some embodiments, the glass coating 16 may include at least one of iron oxide, chromium oxide, copper oxide, cobalt oxide, molybdenum oxide, vanadium oxide, zinc oxide and antimony oxide to promote adhesion of the coating 16 to the metallic shim 12. In some embodiments, the glass coating 16 may include fillers that optimize the flow properties of the coating 16 at the predefined operating temperature such that the glass coating 16 flows to conform to surface irregularities of seal slot surfaces, while remaining coupled to the metallic shim 12, at the predefined operating temperature and the predefined operating pressure. In some such embodiments, the fillers of the glass coating 16 may include at least one refractory oxide. For example, the fillers of the glass coating 16 may include at least one of stabilized zirconia, stabilized hafnia, cristobalite, alumina aluminates, alkaline earth aluminates, rare earth aluminates, titanates, zirconates, hafnates, niobates, tantalates, tungstates and molybdates.

In another mode, the coating 16 may be an enamel coating that becomes soft and deforms or flows to conforms to surface irregularities of seal slot surfaces, while remaining coupled to the metallic shim 12, at a predefined operating temperature and a predefined operating pressure. In this way, the enamel coating 16 may effectively decrease the leakage flow area at the interface of seal slot surfaces and the coating 16 of the seal 10 (depending upon the temperature and pressure in a corresponding seal slot). The enamel coating 16 may deform or flow (e.g., elastically or viscoelastically) at the predefined operating temperature and the predefined operating pressure while remaining coupled to the metallic shim 12. In some embodiments, the enamel coating 16 may be configured such that, at the predefined operating temperature and the predefined operating pressure, the enamel coating 16 becomes "soft" and flows into depressions formed by the surface irregularities of the seal slot surfaces and remains coupled to the metallic shim 12 (depending upon the temperature and pressure at the seal slot surfaces). In some embodiments, the predefined operating temperature of the seal 10 with the enamel coating 16 may be at least 750 degrees Fahrenheit, and the predefined operating pressure may be at least 5 psi. In some other embodiments, the predefined operating temperature of the seal 10 with the enamel coating 16 may be at least 1,000 degrees Fahrenheit, and the predefined operating pressure may be at least 5 psi.

In some embodiments, the enamel coating 16 may include or be formed of a porcelain enamel composition, such as a porcelain enamel composition that is able to coat the metallic shim 12 and prevent oxidation thereof. In some embodiments, the enamel coating 16 may include a glass phase and filler that form an impervious enamel coating 16 cohesively bonded at the interface of the coating 16 and the metallic shim 12. In some embodiments, the enamel coating 16 may include a coefficient of thermal expansion profile similar to that of the shim 12, but such that the enamel coating 16 is under compressive stress during thermal cyclic loading of the seal 10 from ambient temperature to at least about the predefined operating temperature. In some embodiments, the enamel coating 16 may be the A-418 enamel sold by the FERRO Corporation of Mayfield Heights, Ohio.

In some embodiments, the glass phase of the enamel coating 16 may include at least one of alkali alumino boro phospho silicates and alkaline earth alumino boro phospho silicates. In some embodiments, the fillers of the enamel coating 16 may include refractory oxides that optimize the rheology and finish of the enamel coating 16 such that the coating 16 flows and remains coupled to the metallic shim 12 at the predefined operating temperature and the predefined operating pressure. For example, such refractory oxides of the enamel coating 16 may include at least one of clay, talc, alumina and silica. The fillers of the enamel coating 16 may also include oxides that provide control of the softening point, adhesion and crystallization of the enamel coating such that the coating 16 flows and remains coupled to the metallic shim 12 at the predefined operating temperature and the predefined operating pressure. For example, such oxides of the enamel coating 16 may include at least one of rare earth oxides, transition metal oxides and refractory oxides, such as titania, zirconia, antimony oxide, niobia or tantala. The fillers of the enamel coating 16 may also include fibrous refractory fillers that provide strain tolerance such that the coating 16 flows and remains coupled to the metallic shim 12 at the predefined operating temperature and the predefined operating pressure. For example, such fibrous refractory fillers of the enamel coating 16 may include at least one of alumina fibers and zirconia fibers.

In yet another mode, the coating 16 may be a ceramic coating that becomes soft and deforms or flows to conform to surface irregularities of seal slot surfaces, while remaining coupled to the metallic shim 12, at a predefined operating temperature and a predefined operating pressure. In this way, the ceramic coating 16 can effectively decrease the leakage flow area at the interface of seal slot surfaces and the coating 16 of the seal 10 (depending upon the temperature and pressure in a corresponding seal slot). The ceramic coating 16 may deform or flow (e.g., elastically or viscoelastically) at the predefined operating temperature and the predefined operating pressure while remaining coupled to the metallic shim 12. In some embodiments, the ceramic coating 16 is configured such that, at the predefined operating temperature and the predefined operating pressure, the ceramic coating 16 becomes "soft" and flows into depressions formed by the surface irregularities of the seal slot surfaces and remains coupled to the metallic shim 12 (depending upon the temperature and pressure in the corresponding seal slot). In some embodiments, the predefined operating temperature of the seal 10 with the ceramic coating 16 may be at least 750 degrees Fahrenheit, and the predefined operating pressure may be at least 5 psi. In some other embodiments, the predefined operating temperature of the seal 10 with the ceramic coating 16 may be at least 1,000 degrees Fahrenheit, and the predefined operating pressure may be at least 5 psi.

In some embodiments, the ceramic coating 16 may include crystalline ceramic material. For example, the ceramic coating 16 may include stabilized zirconia. In some embodiments, the ceramic coating 16 may be formed of a glassy material. For example, the ceramic coating 16 may be formed of glassy frit. In some embodiments, the ceramic coating 16 may be formed of frit 5213 sold by the FERRO Corporation of Mayfield Heights, Ohio. In some embodiments, the ceramic coating 16 may be formed of a glassy material and crystalline sintering aids. For example, the ceramic coating 16 may be formed of a non-reactive flowable (e.g., viscoelastic) glassy material and/or CuO sintering aids.

In some embodiments, the ceramic coating 16 may be formed of a glassy material and binder material (and, potentially, crystalline sintering aids). For example, the ceramic coating 16 may be formed of a high temperature binder material combined with the ceramic material (and, potentially, sintering aids). In some embodiments, the high temperature binder material may be alkali silicate and/or alumino phosphate. The binder material may include a fine grain size and a flowable (e.g., viscoelastic) nature, and such characteristics of the binder material of the ceramic coating 16 may enable the ceramic coating 16 to flow, while remaining coupled to the metallic shim 12, at the predefined operating temperature and a predefined operating pressure to conform to surface irregularities of seal slot surfaces. As noted above, the ceramic coating 16 may be formed of material that includes sintering aids. For example, the ceramic coating 16 may be formed of material that includes high temperature polymeric precursors (e.g., silazanes and siloxanes) that form glassy oxycarbide or oxynirides as sintering aids. In some other embodiments, the ceramic coating 16 may be formed of material that includes sintering aids other than polymeric precursors. The ceramic coating 16 may also include fibrous refractory fillers that provide strain tolerance such that the ceramic coating 16 flows and remains coupled to the metallic shim 12 at the predefined operating temperature and the predefined operating pressure. For example, such fibrous refractory fillers of the ceramic coating 16 may include at least one of alumina fibers and zirconia fibers.

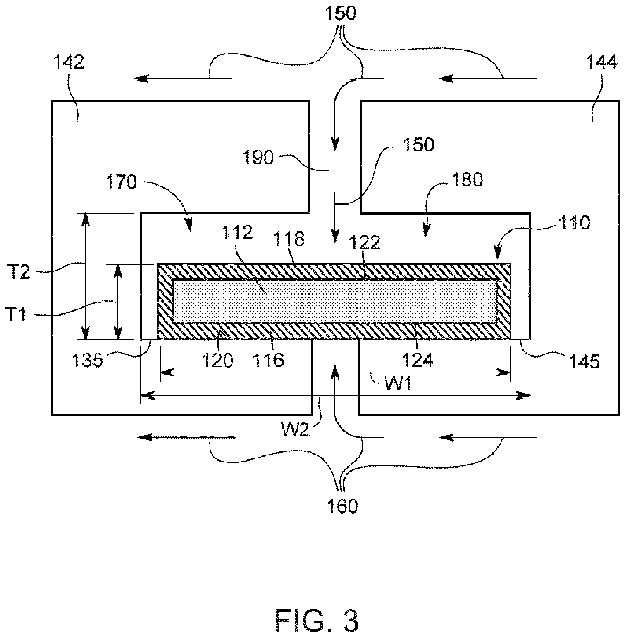

FIG. 3 illustrates a cross-sectional view of an exemplary slot seal assembly 110 positioned within an exemplary seal slot to seal an exemplary junction between turbine components, such as stator components. The exemplary slot seal 110 is substantially similar to the exemplary slot seal assembly 10 of FIGS. 1 and 2 described above, and therefore like reference numerals preceded with "1" are used to indicate like aspects or functions, and the description above directed to such aspects or functions (and the alternative embodiments thereof) equally applies to seal 110. FIG. 3 shows a cross-section of a portion of an exemplary turbomachine including an exemplary first turbine component 142, an adjacent exemplary second turbine component 144, and an exemplary composite slot seal 110 installed in the seal slot formed by the first and second components 142, 144. The first and second turbine components 142, 144 may be first and second stator components, such as first and second nozzles of first and second stators, respectively. In other embodiments, the first and second components 142, 144 may be any other adjacent turbomachinery components, such as stationary or translating and/or rotating (i.e., moving) turbine components. Stated differently, the seal 110 may be configured for, or used with, any number or type of seal slot of turbomachinery components requiring a seal to reduce leakage between the components.

The cross-section of the components 142, 144 and the seal 110 illustrated in FIG. 3 is taken along a width of the structures, thereby illustrating an exemplary width and thickness/height of the structures. It is noted that the relative width, thickness and cross-sectional shape of the structures illustrated in FIG. 3 is exemplary, and the structures may include any other relative width, thickness and cross-sectional shape. Further, the length of the structures (extending in-out of the page of FIG. 3) may be any length, and the shape and configuration of the structures in the length direction may be any shape or configuration. It is also noted that although only two exemplary turbine components 142, 144 forming one seal slot is shown, a plurality of components may form a plurality of seal slots that are in communication with one another. For example, a plurality of turbine components may be circumferentially arranged such that seal slots formed thereby are also circumferentially arranged and in communication with one another. In such embodiments, the seal 110 may be configured to span a plurality of seal slots to seal a plurality of gaps or junctions and thereby reduce leakage between a plurality of turbine components (and/or a plurality of seals 110 may be utilized).

As shown in FIG. 3, the first and second adjacent turbine components 142, 144 may be spaced from one another such that a junction, gap or pathway 190 extends between the first and second adjacent components 142, 144 (such as stators). The junction 190 may allow flow, such as airflow, between the first and second turbine components 142, 144. In some configurations, the first and second turbine components 142, 144 may be positioned between a first airflow 150, such as a cooling airflow, and a second airflow 160, such as hot combustion airflow. It is noted that the term "airflow" is used herein to describe the movement of any material or composition, or combination of materials or compositions, translating through the junction 190 between the first and second turbine components 142, 144. The first airflow 150 may be greater than the second airflow 160, as explained further below.

To accept a seal that spans across the junction 190, and thereby block or otherwise cutoff the junction 190, the first and second adjacent components 142, 144 may each include a slot, as shown in FIG. 3. In the exemplary illustrated embodiment, the first component 142 includes a first seal slot 170 and the second component includes a second seal slot 180. The first and second seal slots 170, 180 may have any size, shape, or configuration capable of accepting a seal therein. For example, as shown in the illustrated exemplary embodiment in FIG. 3, the first and second seal slots 170, 180 may be substantially similar to one another and positioned in a mirrored relationship to define together a net seal slot or cavity that extends from within the first component 142, across the junction 190, and into the second component 144. In this manner, the pair of first and second seal slots 170, 180 may jointly form a seal slot or cavity to support opposing portions of the seal 11 0 such that the seal 110 passes across or through the junction 190 extending between the adjacent components 142, 144.

In some arrangements wherein the first and second turbine components 142, 144 are adjacent, the first and second seal slots 170, 180 may be configured such that they are substantially aligned (e.g., in a mirrored or symmetric relationship). However, due to manufacturing and assembly limitations and/or variations, as well as thermal expansion, movement and the like during use, the first and second seal slots 170, 180 may be skewed, twisted, angled or otherwise misaligned. In other scenarios, the first and second seal slots 170, 180 may remain in a mirrored or symmetric relationship, but the relative positioning of the first and second seal slots 170, 180 may change (such as from use, wear or operating conditions). The term "misaligned" is used herein to encompass any scenario wherein seal slots have changed relative positions or orientations as compared to a nominal or initial position or configuration.

With respect to the exemplary first and second seal slots 170, 180 of the exemplary first and second turbine components 142, 144 and the exemplary seal 110 of FIG. 3, in a misaligned configuration (not shown) the exemplary seal 110 may be sufficiently flexible to account for the misalignment and maintain sealing contact of the coating 116 with the first and second seal slots 170, 180 to effectively cut off or eliminate the junction 190 extending between the first and second turbine components 142, 144 to thereby reduce or prevent the first and second airflows 150, 160 from interacting.

As shown in FIG. 3 the first and second airflows 150, 160 may interact with the junction 190 in that the first airflow 150 is stronger than the second airflow 160 such that it is a "driving" airflow that acts against the exterior surface 118 of the coating 116 of the seal 110 (or the shim 112 if the coating is not present on that portion of the shim 112) and forces the sealing surface or side 120 of the coating 116 of the seal 110 against first side surfaces 135, 145 of the first and second seal slots 170, 180, respectively. The first airflow 150 (e.g., in cooperation with the second airflow 160) may thereby form the operating pressure within the net seal slot formed by the first and second seal slots 170, 180 that acts to force the sealing surface or side 120 of the coating 116 of the seal 110 against first side surfaces 135, 145 of the first and second seal slots 170, 180, respectively. In some embodiments, the operating pressure within the net seal slot may be about or greater than the predefined operating pressure of the seal 110. Similarly, the temperature within the net seal slot formed by the first and second seal slots 170, 180, such as the temperature at least at the first side surfaces 135, 145 thereof, may be at an operating temperature that is about or above the predefined operating temperature of the seal 110.

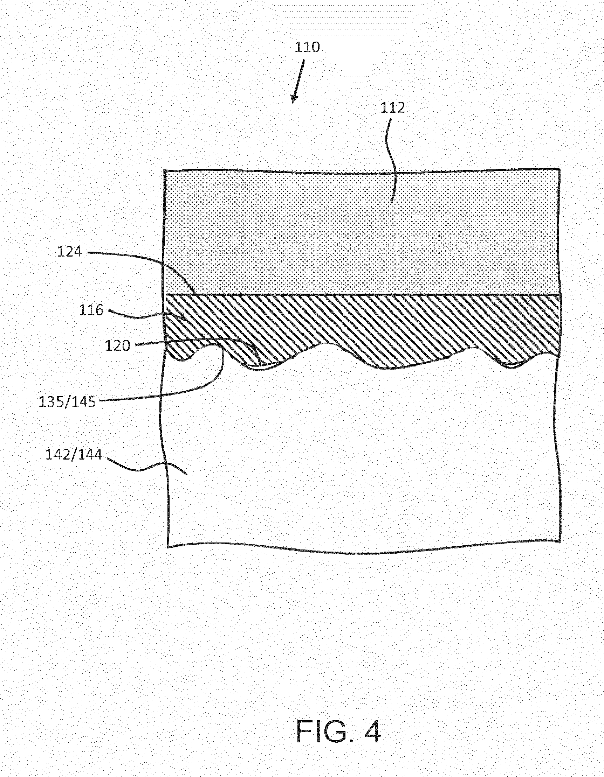

In embodiments with the operating pressure and the operating temperature of the seal slot formed by the first and second turbine components 142, 144 being at or above the predefined operating pressure and the predefined operating temperature of the seal 110 (as described above), the coating 116 may conform to the surface irregularities of the first side surfaces 135, 145 and remain coupled to the metallic shim to reduce leakage past the seal 110 through the junction or gap 190. For example, as described above and shown in FIG. 4, in such a scenario the coating 116 may deform or flow while remaining coupled to the metallic shim 112 to conform to the surface irregularities of the first side surfaces 135, 145 and thereby reduce leakage past the seal 110. In some embodiments, in such a scenario the coating 116 may flow (e.g., viscoelastically), but remain coupled to the metallic shim 112, to conform to the surface irregularities of the first side surfaces 135, 145 thereby reduce leakage past the seal 110. As noted above, the surface irregularities of the first side surfaces 135, 145 may be a function of the manufacturing process(es) used to form the first and second seal slots 170, 180, such as via an electric discharge machining process. The surface irregularities of the first side surfaces 135, 145 may form a surface roughness Ra greater than about 1 mm, and in some embodiments up to about 12.5 micrometers.

As also shown in FIG. 4, the coating 116 may conform to the surface irregularities of the first side surfaces 135, 145 (and remain attached to the shim 112) without completely filling one or more depression formed by the surface irregularities. Rather, in some embodiments the coating 116 may deform to conform to the surface irregularities of the first side surfaces 135, 145 (and remain attached to the shim 112) by partially or flowing into at least one of the depressions formed by the surface irregularities. In this way, the coating 116 may effectively decrease the leakage flow area at the interface of the side surfaces 135, 145 and the sealing surface or side 120 of the coating 116 of the seal 11 0 and thereby reduce leakage past the seal 110. In some other embodiments, the coating 116 may conform to the surface irregularities of the first side surfaces 135, 145 (and remain attached to the shim 112) by deforming or flowing fully into at least one of the depressions formed by the surface irregularities.

The seal 110 (and/or coating 166) may be sufficiently flexible to deform (e.g., elastically) as a result of the pressure applied by the first airflow 150 (e.g., above that applied by the second airflow 160) (i.e., the operating pressure within the seal slot) to account for surface irregularities of (and/or misalignment between) the first and second seal slots 170, 180, but sufficiently stiff to resist being "folded" or otherwise "pushed" into the junction 190. Stated differently, the exemplary seal 110 may be preferably sufficiently flexible, but yet sufficiently stiff, to maintain sealing engagement of the sealing surface or side 120 of the coating 116 of the seal 110 with the first side surfaces 135, 145 via the forces of the first airflow 150 (i.e., the operating pressure within the seal slot). In addition to being sufficiently flexible (in all directions) to effectively seal the junction 190 (e.g., due to surface roughness and/or misalignment of the first side surfaces 135, 145), the exemplary seal 11 0 may also be sufficiently stiff to satisfy assembly requirements.

The size of the seal 110 may be any size, but may be dependent upon, or at least related to, the components 142, 144 in which the seal 110 is designed to be installed. The thickness T1 of the exemplary seal 110 may be less than the thickness T2 of the first and second seal slots 170, 180, and thereby the thickness T2 of the net slot created by the first and second seal slots 170, 180 when the first and second adjacent components 142, 144 are assembled. In some embodiments, the thickness T1 of the exemplary seal 11 0 may preferably be within the range of about .01 inches to about ¼ inches, and more preferably within the range of about .05 inches to about .1 inches. Similarly, the width W1 of the seal 110 may be less than the width W2 of the net slot created by the first and second slots 170, 180 of the first and second components 142, 144, respectively, and the gap 190 between the components 142, 144 when the components 142, 144 are installed adjacent to one another. In some embodiments, the width W1 of the exemplary seal 110 may preferably be within the range of about 0.125 inches to about 0.75 inches.

As shown in the illustrated embodiment in FIG. 3, for example, the seal 110 may be positioned and arranged within the seal slot (i.e., the first and second seal slots 170, 180) such that the first or cooling airflow 150 acts against the exterior surface 118 of the coating 16 (or seal 10) to force the sealing side or surface 120 of the coating 116 against the first side surfaces 135, 145 of the first and second seal slots 170, 180. As also shown in FIG. 3, the second or hot airflow 160 may act on the sealing side or surface 120 of the coating 116, and thereby oppose (at least in part) the cooling airflow 150. However, the first or cooling airflow 150 may exert a force against the exterior surface 118 of the seal 1 0 that is greater than the opposing force exerted by the second or hot airflow 160 on the sealing side or surface 120 of the seal 10. In this way, the differential or net pressure of the first or cooling airflow 150 (i.e., the force of the first or cooling airflow 150 above any opposing force of the second or hot airflow 160) may act across the seal 10 to force the coating 16 of the seal 10 against the first side surfaces 135, 145 of the first and second seal slots 170, 180. The differential or net pressure of the first or cooling airflow 150 may thereby be an operating pressure of the seal 1 0. In the embodiment shown in FIGS. 3 and 4, the differential or net pressure of the first or cooling airflow 150 (i.e., the operating pressure in the seal slot) is equal to or greater than the predefined operating pressure of the seal 1 0. However, in other embodiments the differential or net pressure of the first or cooling airflow 150 (i.e., the operating pressure in the seal slot) may be less than the predefined operating pressure of the seal 10.

Due to the impervious nature of the shim 112 and/or the coating 116 and the conforming nature of the coating 116, the seal 11 0 may thereby prevent the cooling airflow 150 from migrating through the gap 190 and into the second or hot combustion airflow 160. Further, the coating 116 protects the metallic shim 112 from the high temperatures of the combustion airflow 160. In this way, at least the shape and configuration of the sealing side or surface 120 of the coating 116 of the seal 110 (e.g., the surface that interacts with the exemplary first side surfaces 135, 145 or other sealing surfaces of the exemplary first and second seal slots 170, 180) before deformation or flowing thereof may be related to the shape and configuration of the slots 142, 144 in which the seal 110 is installed. Stated differently, the shape and configuration of at least the sealing side or surface 120 of the coating 116 of the seal 110 before deformation or flowing thereof, such as the contour, surface texture, etc. thereof, may be configured to ensure sealing engagement with the first and second seal slots 170, 180 in which the seal 110 is installed. For example, in the illustrated example in FIG. 3, the sealing side or surface 120 of the coating 116 of the seal 110 may be substantially smooth and planar to substantially abut or otherwise substantially engage the substantially planar first side surfaces 135, 145 of the first and second seal slots 170, 180 (before deformation or flowing of the coating 116 to conform to the surface irregularities of the first side surfaces 135, 145). In some alternative embodiments (not shown), the shape and configuration of at least the sealing side or surface 120 of the coating 116 of the seal 110 may be shaped or configured differently than that of the corresponding sealing surfaces of the first and second seal slots 170, 180 (such as the exemplary first side surfaces 135, 145 of the first and second seal slots 170, 180 illustrated in FIG. 3).

The seals disclosed herein provide low leakage rates similar to or greater than that possible with tradition slot seals, such as solid metal shim seals, while eliminating the silicide formation, oxidation, thermal creep and/or increased wear concerns when applied to modern high temperature turbomachinery. Further, the seals disclosed herein reduce leakage by conforming to the surface irregularities of seal slot surfaces, while remaining attached or coupled to the seals. In this way, the seals are able to adapt to changes in the surface roughness of the seal slot surfaces. In some embodiments, the coatings of the seals may soft and thereby able to deform or flow (e.g., elastically or viscoelastically) at a predefined operating temperature and a predefined operating pressure acting to force the coating against the seal slot surfaces while remaining coupled to the underlying shim, and thereby able to at least partially conform to surface irregularities of the seal slot surfaces (when the seal slots include a temperature about or above the predefined operating temperature and/or a pressure about or above the predefined operating pressure) to reduce leakage past the seal through the gap between the turbine components. Moreover, the seals disclosed herein may be less susceptible to manufacturing variations as compared to existing seals. The seal disclosed herein thus reduce leakage with low manufacturing and operational risks, and are applicable in both OEM and retrofit applications.

The coatings of the seals disclosed herein may take any form and may be formed on the metallic shims by any method. For example, the coatings may be formulated as slurries in aqueous or non-aqueous solvents with or without other additives, such as surfactants, dispersants, wetting agents, organic binders and/or electrolyte salts. As another example, the coatings may be applied on the shims using any technique, such as sparing, dip coating, wash coating, etc. In some embodiments, the coating may be formed on the metallic shim by wet coating and subsequent heat treatment (after drying of the coating) to densify and form an impervious layer on the shim that prevents metal oxidation of the metallic shim at operating conditions of turbine seal slots.

It is to be understood that the above description is intended to be illustrative, and not restrictive. Numerous changes and modifications may be made herein by one of ordinary skill in the art without departing from the general spirit and scope of the invention as defined by the following claims and the equivalents thereof. For example, the above-described embodiments (and/or aspects thereof) may be used in combination with each other. In addition, many modifications may be made to adapt a particular situation or material to the teachings of the various embodiments without departing from their scope. While the dimensions and types of materials described herein are intended to define the parameters of the various embodiments, they are by no means limiting and are merely exemplary. Many other embodiments will be apparent to those of skill in the art upon reviewing the above description. The scope of the various embodiments should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects. Also, the term "operably connected" is used herein to refer to both connections resulting from separate, distinct components being directly or indirectly coupled and components being integrally formed (i.e., monolithic). It is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the disclosure may include only some of the described embodiments. Accordingly, the invention is not to be seen as limited by the foregoing description, but is only limited by the scope of the appended claims.

This written description uses embodiments to disclose the invention, including the best mode, and also to enable any person skilled in the art to practice the invention, including making and using any devices or systems and performing any incorporated methods. The patentable scope of the invention is defined by the claims.

## Claims

1. A seal (10, 110) for positioning within a seal slot (170, 180) of a turbomachine formed at least partially by seal slot surfaces (135, 145) of adjacent components (142, 144) to prevent leakage across a gap (190) extending between the components (142, 144), the seal (10, 110) comprising:
a metallic shim (12, 112) defining and outer surface including a sealing surface (24, 124) and a support surface (22, 122); and
a coating (16, 116) overlying and coupled to at least the sealing surface (24, 124) of the metallic shim (12, 112) and forming an outer surface (20, 120) of the seal (10, 110) for engagement with the seal slot surfaces (135, 145), the coating (16, 116) operable to conform to surface irregularities of the seal slot surfaces (135, 145) and remain coupled to the metallic shim (12, 112) at a predefined operating temperature and a predefined operating pressure to reduce leakage past the seal (10, 110) and through the gap (190),
**characterized in that** the coating material is chosen such that the coating (16, 116), to conform to the surface irregularities of the seal slot surfaces (135, 145), is operable to elastically deform, plastically deform, or flow, while remaining coupled to the metallic shim (12, 112) at the predefined operating temperature and the predefined operating pressure.

2. The seal (10, 110) of claim 1, wherein the coating (16, 116) is a metallic coating (16, 116), and wherein the melting temperature of the metallic coating (16, 116) is above the predefined operating temperature.

3. The seal (10, 110) of claim 2, wherein the predefined operating temperature is at least 1,500 degrees Fahrenheit (1088.705556 K) and the predefined operating pressure is at least 5 psi (34473.7864 Pa) acting to force the coating (16, 116) against the seal slot surfaces (135, 145).

4. The seal (10, 110) of claim 2, wherein the metallic coating (16, 116) is a copper alloy.

5. The seal (10, 110) of claim 1, wherein the predefined operating temperature is at least 750 degrees Fahrenheit (672.038889 K) and the predefined operating pressure is at least 5 psi (34473.7864 Pa) acting to force the coating (16, 116) against the seal slot surfaces (135, 145).

6. The seal (10, 110) of claim 1, wherein the coating (16, 116) is a glass coating (16, 116) comprising a glass phase and oxides.

7. The seal (10, 110) of claim 1, wherein the coating (16, 116) is an enamel coating (16, 116) comprising a glass phase and fillers.

8. The seal (10, 110) of claim 1, wherein the coating (16, 116) is a ceramic coating (16, 116) comprising a crystalline ceramic material.

9. The seal (10, 110) of claim 1, wherein the surface irregularities of the seal slot surfaces (135, 145) form a surface roughness Ra within the range of 1 micrometer to 12.5 micrometers.

10. The seal (10, 110) of claim 1, wherein the coating (16, 116) includes a coefficient of thermal expansion (CTE) within 25% of a CTE of the metallic shim (12, 112).

11. The seal (10, 110) of claim 1, wherein the predefined operating pressure is within the range of 5 psi and 200 psi (34,473 KPa and 1378,9 KPa) acting to force the coating (16, 116) against the seal slot surfaces (135, 145).

12. A turbomachine comprising:
a first turbine component (142) and a second turbine component (144) adjacent the first turbine component (142), the first and second turbine components (142, 144) including seal slot surfaces (135, 145) at least partially forming a seal slot (170, 180) extending across a gap (190) between the first and second turbine components (142, 144); and
a seal (10, 110) according to claim 1 positioned within the seal slot (170, 180) and extending across the gap (190) to reduce leakage therethrough, the seal (10, 110), **characterized in that** the coating (16, 116) comprises:
a metallic coating (16, 116) comprising a copper alloy;
a glass coating (16, 116) comprising a glass phase and oxides of at least one of an alkali metals, an alkaline earth metals and a rare earth metals;
an enamel coating (16, 116) comprising refractory oxide compounds and at least one of alkali alumino boro phospho silicates and alkaline earth alumino boro phospho silicates; or
a ceramic coating (16, 116) comprising a crystalline ceramic material.

13. The turbomachine according to the preceding claim, wherein the coating (16, 116) is a glass coating (16, 116) or an enamel coating (16, 116), and wherein the coating (16, 116) is operable to flow to conform to the surface irregularities of the seal slot surfaces (135, 145) and remain coupled to the metallic shim (12, 112) at the predefined operating temperature and the predefined operating pressure.

## Patentansprüche

1. Dichtung (10, 110) zur Positionierung innerhalb eines Dichtungsschlitzes (170, 180) einer Turbomaschine, die zumindest teilweise von Dichtungsschlitzflächen (135, 145) benachbarter Komponenten (142, 144) ausgebildet ist, um eine Leckage durch einen Spalt (190) zu verhindern, der sich zwischen den Komponenten (142, 144) erstreckt, wobei die Dichtung (10, 110) umfasst:
eine metallische Beilagscheibe (12, 112), die eine Außenfläche aufweist, die eine Dichtfläche (24, 124) und eine Stützfläche (22, 122) umfasst; und
eine Beschichtung (16, 116), die wenigstens über der Dichtfläche (24, 124) der metallischen Beilagscheibe (12, 112) liegt und wenigstens mit dieser gekoppelt ist und die eine Außenfläche (20, 120) der Dichtung (10, 110) zum Eingriff mit den Dichtungsschlitzflächen (135, 145) bildet, wobei die Beschichtung (16, 116) konfiguriert ist, um sich an Oberflächenunebenheiten der Dichtungsschlitzflächen (135, 145) anzupassen und mit der metallischen Beilagscheibe (12, 112) bei einer vordefinierten Betriebstemperatur und einem vordefinierten Betriebsdruck gekoppelt zu bleiben, um eine Leckage an der Dichtung (10, 110) vorbei und durch den Spalt (190) zu reduzieren, **dadurch gekennzeichnet, dass** das Beschichtungsmaterial so gewählt ist, dass die Beschichtung (16, 116), um sich an die Oberflächenunebenheiten der Dichtungsschlitzflächen (135, 145) anpassen zu können, elastisch verformbar, plastisch verformbar oder fließfähig ist, während sie bei der vordefinierten Betriebstemperatur und dem vordefinierten Betriebsdruck mit der metallischen Beilagscheibe (12, 112) gekoppelt bleibt.

2. Dichtung (10, 110) nach Anspruch 1, wobei die Beschichtung (16, 116) eine metallische Beschichtung (16, 116) ist und wobei die Schmelztemperatur der metallischen Beschichtung (16, 116) über der vordefinierten Betriebstemperatur liegt.

3. Dichtung (10, 110) nach Anspruch 2, wobei die vordefinierte Betriebstemperatur mindestens 1.500 Grad Fahrenheit (1088,705556 K) und der vordefinierte Betriebsdruck mindestens 5 psi (34473,7864 Pa) beträgt, wodurch die Beschichtung (16, 116) gegen die Dichtungsschlitzflächen (135, 145) gedrückt wird.

4. Dichtung (10, 110) nach Anspruch 2, wobei die metallische Beschichtung (16, 116) eine Kupferlegierung ist.

5. Dichtung (10, 110) nach Anspruch 1, wobei die vordefinierte Betriebstemperatur mindestens 750 Grad Fahrenheit (672,038889 K) und der vordefinierte Betriebsdruck mindestens 5 psi (34473,7864 Pa) beträgt, um die Beschichtung (16, 116) gegen die Dichtungsschlitzflächen (135, 145) zu drücken.

6. Dichtung (10, 110) nach Anspruch 1, wobei die Beschichtung (16, 116) eine Glasbeschichtung (16, 116) ist, die eine Glasphase und Oxide umfasst.

7. Dichtung (10, 110) nach Anspruch 1, wobei die Beschichtung (16, 116) eine Emailbeschichtung (16, 116) ist, die eine Glasphase und Füllstoffe umfasst.

8. Dichtung (10, 110) nach Anspruch 1, wobei die Beschichtung (16, 116) eine Keramikbeschichtung (16, 116) ist, die ein kristallines Keramikmaterial umfasst.

9. Dichtung (10, 110) nach Anspruch 1, wobei die Oberflächenunebenheiten der Dichtungsschlitzflächen (135, 145) eine Oberflächenrauheit Ra im Bereich von 1 Mikrometer bis 12,5 Mikrometer bilden.

10. Dichtung (10, 110) nach Anspruch 1, wobei die Beschichtung (16, 116) einen Wärmeausdehnungskoeffizienten (WAK) innerhalb von 25 % eines WAKs der metallischen Beilagscheibe (12, 112) umfasst.

11. Dichtung (10, 110) nach Anspruch 1, wobei der vordefinierte Betriebsdruck im Bereich von 5 psi bis 200 psi (34,473 kPa und 1378,9 kPa) liegt, um die Beschichtung (16, 116) gegen die Dichtungsschlitzflächen (135, 145) zu drücken.

12. Turbomaschine, umfassend:
eine erste Turbinenkomponente (142) und eine zweite Turbinenkomponente (144) neben der ersten Turbinenkomponente (142), wobei die erste und die zweite Turbinenkomponente (142, 144) Dichtungsschlitzflächen (135, 145) aufweisen, die zumindest teilweise einen Dichtungsschlitz (170, 180) bilden, der sich über einen Spalt (190) zwischen der ersten und der zweiten Turbinenkomponente (142, 144) erstreckt; und
eine Dichtung (10, 110) nach Anspruch 1, die innerhalb des Dichtungsschlitzes (170, 180) angeordnet ist und sich über den Spalt (190) erstreckt, um eine Leckage durch ihn hindurch zu verringern, wobei die Dichtung (10, 110) **dadurch gekennzeichnet ist, dass** die Beschichtung (16, 116) umfasst:
eine metallische Beschichtung (16, 116), die eine Kupferlegierung umfasst;
eine Glasbeschichtung (16, 116), umfassend eine Glasphase und Oxide von mindestens einem von Alkalimetallen, Erdalkalimetallen und Seltenerdmetallen;
eine Emailbeschichtung (16, 116), die feuerfeste Oxidverbindungen und mindestens eines von Alkali-Aluminoborophosphorsilicaten und Erdalkali-Aluminoborophosphorsilicaten umfasst; oder
eine Keramikbeschichtung (16, 116), die ein kristallines Keramikmaterial umfasst.

13. Turbomaschine nach dem vorhergehenden Anspruch, wobei die Beschichtung (16, 116) eine Glasbeschichtung (16, 116) oder eine Emailbeschichtung (16, 116) ist und wobei die Beschichtung (16, 116) fließfähig ist, um sich an die Oberflächenunebenheiten der Dichtungsschlitzflächen (135, 145) anzupassen und um mit der metallischen Beilagscheibe (12, 112) bei der vordefinierten Betriebstemperatur und dem vordefinierten Betriebsdruck gekoppelt zu bleiben.

## Revendications

1. Joint d'étanchéité (10, 110) destiné à être positionné à l'intérieur d'une fente d'étanchéité (170, 180) d'une turbomachine formée au moins partiellement par des surfaces de fente d'étanchéité (135, 145) d'éléments adjacents (142, 144) pour empêcher une fuite à travers un espace (190) s'étendant entre les éléments (142, 144), le joint d'étanchéité (10, 110) comprenant :
une cale métallique (12, 112) définissant une surface extérieure comprenant une surface d'étanchéité (24, 124) et une surface de soutien (22, 122) ; et
un revêtement (16, 116) recouvrant au moins la surface d'étanchéité (24, 124) de la cale métallique (12, 112) et accouplé à cette dernière et formant une surface externe (20, 120) du joint d'étanchéité (10, 110) pour l'engagement avec les surfaces (135, 145) de la fente d'étanchéité, le revêtement (16, 116) pouvant être appliqué poursuivre les irrégularités des surfaces de fente d'étanchéité (135, 145) et restant accouplé à la cale métallique (12, 112) à une température de fonctionnement prédéfinie et à une pression de fonctionnement prédéfinie pour réduire la fuite au-delà du joint d'étanchéité (10, 110) et à travers l'espace (190), **caractérisé en ce que** le matériau de revêtement est choisi de sorte que le revêtement (16, 116), pour suivre les irrégularités de surface des surfaces de fente d'étanchéité (135, 145), est utilisable pour se déformer de façon élastique, pour se déformer de façon plastique ou pour s'écouler, tout en restant accouplé à la cale métallique (12, 112) à la température de fonctionnement prédéfinie et à la pression de fonctionnement prédéfinie.

2. Joint d'étanchéité (10, 110) selon la revendication 1, dans lequel le revêtement (16, 116) est un revêtement métallique (16, 116) la température de fusion du revêtement métallique (16, 116) étant supérieure à la température de fonctionnement prédéfinie.

3. Joint d'étanchéité (10, 110) selon la revendication 2, dans lequel la température de fonctionnement prédéfinie est d'au moins 1 500 degrés Fahrenheit (1088,705556 K) et la pression de fonctionnement prédéfinie est d'au moins 5 psi (34473,7864 Pa) et agit pour forcer le revêtement (16, 116) contre les surfaces de fente de joint d'étanchéité (135, 145).

4. Joint d'étanchéité (10, 110) selon la revendication 2, dans lequel le revêtement métallique (16, 116) est un alliage de cuivre.

5. Joint d'étanchéité (10, 110) selon la revendication 1, dans lequel la température de fonctionnement prédéfinie est d'au moins 750 degrés Fahrenheit (672,038889 K) et la pression de fonctionnement prédéfinie est d'au moins 5 psi (34473,7864 Pa) et agit pour forcer le revêtement (16, 116) contre les surfaces de fente de joint d'étanchéité (135, 145).

6. Joint d'étanchéité (10, 110) selon la revendication 1, dans lequel le revêtement (16, 116) est un revêtement de verre (16, 116) comprenant une phase vitreuse et des oxydes.

7. Joint d'étanchéité (10, 110) selon la revendication 1, dans lequel le revêtement (16, 116) est un revêtement d'émail (16, 116) comprenant une phase vitreuse et des charges.

8. Joint d'étanchéité (10, 110) selon la revendication 1, dans lequel le revêtement (16, 116) est un revêtement de céramique (16, 116) comprenant un matériau céramique cristallin.

9. Joint d'étanchéité (10, 110) selon la revendication 1, dans lequel les irrégularités de surface des surfaces de fente de joint d'étanchéité (135, 145) forment une rugosité de surface Ra comprise entre 1 micromètre et 12,5 micromètres.

10. Joint d'étanchéité (10, 110) selon la revendication 1, dans lequel le revêtement (16, 116) a un coefficient de dilatation thermique (CTE) inférieur à 25 % d'un CTE de la cale métallique (12, 112).

11. Joint d'étanchéité (10, 110) selon la revendication 1, dans lequel la pression de fonctionnement prédéfinie est comprise entre 5 psi et 200 psi (34,473 kPa et 1 378,9 kPa) et agit pour forcer le revêtement (16, 116) contre les surfaces de fente de joint d'étanchéité (135, 145).

12. Turbomachine comprenant :
un premier élément de turbine (142) et un second élément de turbine (144) adjacents au premier élément de turbine (142), les premier et second éléments de turbine (142, 144) comprenant des surfaces de fente de joint d'étanchéité (135, 145) formant au moins partiellement une fente de joint d'étanchéité (170, 180) s'étendant à travers un espace (190) entre les premier et second éléments de turbine (142, 144) ; et
un joint d'étanchéité (10, 110) selon la revendication 1, positionné à l'intérieur de la fente d'étanchéité (170, 180) et s'étendant à travers l'espace (190) pour réduire la fuite à travers celui-ci, le joint d'étanchéité (10, 110) **se caractérisant en ce que** le revêtement (16, 116) comprend :
un revêtement métallique (16, 116) comprenant un alliage de cuivre ;
un revêtement de verre (16, 116) comprenant une phase vitreuse et des oxydes d'au moins l'un parmi un métal alcalin, un métal alcalinoterreux et un métal des terres rares ;
un revêtement d'émail (16, 116) comprenant des composés d'oxydes réfractaires et au moins l'un des alumino-boro-phospho silicates alcalins et des alumino-boro-phospho silicates alcalins des oxydes alcalino-terreux ; ou
un revêtement céramique (16, 116) comprenant un matériau céramique cristallin.

13. Turbomachine selon la revendication précédente, dans laquelle le revêtement (16, 116) est un revêtement de verre (16, 116) ou un revêtement d'émail (16, 116), le revêtement (16, 116) pouvant s'écouler pour suivre les irrégularités de surface des surfaces de fente d'étanchéité (135, 145) et pour rester accouplé à la cale métallique (12, 112) à la température de fonctionnement prédéfinie et à la pression de fonctionnement prédéfinie.
